Europäisches Patentamt

European Patent Office

Office européen des brevets

(11) Veröffentlichungsnummer : **0 033 118**
**B1**

# EUROPÄISCHE PATENTSCHRIFT

(45) Veröffentlichungstag der Patentschrift :
02.05.84

(21) Anmeldenummer : 81100377.1

(22) Anmeldetag : 20.01.81

(51) Int. Cl.³ : **G 02 B   7/26**

(54) **Lösbare Kupplung zum Verbinden von insbesondere mehreren Lichtwellenleitern.**

(30) Priorität : 24.01.80 DE 3002473

(43) Veröffentlichungstag der Anmeldung :
05.08.81 Patentblatt 81/31

(45) Bekanntmachung des Hinweises auf die Patenterteilung : 02.05.84 Patentblatt 84/18

(84) Benannte Vertragsstaaten :
DE FR GB IT

(58) Entgegenhaltungen :
DE-B- 2 516 662
FR-A- 2 280 091
FR-A- 2 363 124
FR-A- 2 439 409
US-A- 4 076 379

(73) Patentinhaber : TELDIX GmbH
Grenzhöfer Weg 36 Postfach 105608
D-6900 Heidelberg 1 (DE)

(72) Erfinder : Hoffmann, Hartmut, Dipl.-Ing.
Bürgermeister-Weidemaier- Str. 29
D-6906 Leimen (DE)
Erfinder : Baron, Klaus Uwe, Dr. rer. nat.
Turnerstrasse 11
D-6900 Heidelberg (DE)

(74) Vertreter : Kammer, Arno, Dipl.-Ing.
TELDIX GmbH Postfach 10 56 08 Grenzhöfer Weg 36
D-6900 Heidelberg 1 (DE)

Lösbare Kupplung zum Verbinden von insbesondere mehreren Lichtwellenleitern

Die Erfindung betrifft eine lösbare Kupplung zum Verbinden von insbesondere mehreren Lichtwellenleitern, enthaltend für jede Kupplungshälfte je ein mit wenigstens einer präzis positionierten Bohrung versehenes Kernteil, in denen die einzelnen Lichtwellenleiter oder Lichtwellenleiterbündel eingeführt und befestigt sind, je eine Hülse, in der das Kernteil gelagert ist und die über einen Teil des Umfangs gehende Fortsätze aufweist, je einen axial verlaufenden Führungsstift und um 180° dazu versetzt eine Führungsöffnung an der Stirnseite des Kernteils, und je eine Übermutter zum Verschrauben der Kupplung.

Eine Kupplung für Lichtwellenleiter mit den oben angegebenen Merkmalen ist aus der DE-B 25 16 662 bekannt. Dort ist das Kernteil starr in der Hülse gelagert, jede Hülse weist eine Halbschale als Fortsatz auf, wobei die beiden Halbschalen zweier gekuppelter Kupplungshälften die beiden die eigentliche Kupplung bewirkenden Kernteile umschließen. Zum Kuppeln wird als drittes Teil eine Zwischenhülse benötigt, mit deren beiden Enden nach dem Verbinden der Kernteile mittels der Führungsstifte und der Führungsöffnungen die beiden Überwurfmuttern verschraubt werden.

Gegenüber anderen bekannten Lösungen mit unterschiedlich aufgebauten zu kuppelnden « Hälften » hat diese bekannte Lösung den Vorteil, daß sowohl die Hülsen als auch die Kernteile identisch aufgebaut werden können, daß durch die Stifte und Öffnungen eine eindeutige Zuordnung der Lichtwellenleiter gewährleistet ist und auch die Übergangsverluste gering gehalten werden können.

Der Erfindung liegt die Aufgabe zugrunde, unter Beibehaltung der genannten Vorteile die bekannte Kupplung so zu verbessern, daß einmal ein drittes gesondertes Teil (Zwischenhülse) nicht benötigt wird und somit die Kupplung und das Kuppeln vereinfacht wird und außerdem die Genauigkeitsanforderungen an die Hülsen reduziert werden können.

Diese Aufgabe wird durch die im Anspruch 1 angegebenen Merkmale gelöst.

Die Erfindung kann zum Kuppeln eines Lichtwellenleiters benutzt werden, ist jedoch vorzugsweise zum Kuppeln mehrerer Leiter gedacht.

Bei der erfindungsgemäßen Lösung können die zu kuppelnden Kernteile aufgrund ihrer Lagerung in den Hülsen axiale, radiale und damit auch Kippbewegung ausführen. Dadurch braucht eine sehr hohe Fertigungsgenauigkeit für die Hülsen nicht gefordert werden. Eine hohe Genauigkeit ist somit nur beim Einbringen der Bohrungen für die Lichtwellenleiter und der Führungsöffnung und beim Anbringen des Führungsstifts notwendig. Dadurch, daß die Kernteile bei der Kupplung gegen die Federkraft verschoben werden müssen, ist gewährleistet, daß es mit großer Sicherheit zu einer einwandfreien und damit verlustarmen Kupplung der einzelnen Lichtwellenleiter kommt. Die axiale Verschiebbarkeit von solchen Kernteilen gegen eine Federkraft ist an sich bekannt, z. B. aus der US-A 4 076 379.

Die einwandfreie und damit verlustarme Kupplung der einzelnen Lichtwellenleiter wird außerdem dadurch unterstützt, daß die Bereiche, an denen Lichtwellenleiter enden, erhaben ausgebildet sind, d. h., es sind über die Stirnfläche des Kernteils überstehende kleine Erhebungen mit planer Oberfläche vorgesehen. Hierdurch ist nur ein relativ geringer Teil der Gesamtoberfläche des Kernteils mit der notwendigen Oberflächengüte zu versehen, zum andern ist die Wahrscheinlichkeit, daß Schmutzteile die exakte Kupplung stören, stark vermindert. Dies ist insbesondere dann der Fall, wenn man gemäß einer Weiterbildung der Erfindung die Stellen, an denen die Führungsöffnung und der Führungsstift angebracht sind, in die zurückgesetzten (also in die nicht erhabenen) Bereiche legt. Beim Kuppeln von dem Führungsstift abgestreifte Schmutzteile gelangen dann nicht in die erhabenen Bereiche und können somit nicht stören. Eine ausreichende Säuberung der Stirnfläche wird ebenfalls erleichtert, weil es nur darauf ankommt, die erhabenen Flächen sauber zu halten und schwerer zu beseitigende Schmutzteile am Fuß des Stifts nicht stören können. Gegebenenfalls wird man zur Stabilisierung der beiden durch die Stifte verbundenen Kernteile noch zusätzlich erhabene Flächenteile vorsehen, z. B. einen erhabenen (gleich hohen) Randbereich. Schließlich wird dadurch, daß die Fortsätze an beiden Hülsen bzw. eines die Hülse umgebenden Teils (bei einer später zu beschreibenden Spezialversion) als Teile zum Verbinden mit der Überwurfmutter des Gegenstücks ausgenutzt werden, eine besondere, getrennt vorzusehende Zwischenhülse vermieden. Wie bereits erwähnt, ist der Vorteil, daß die beiden zu kuppelnden Hälften aus gleichen Teilen aufgebaut sind, auch bei der Erfindung erhalten. Eine besonders günstige Ausführung entsteht gemäß einer Ausbildung der Erfindung dann, wenn man erstens die Lichtwellenleiter auf einer Geraden anordnet, die die Mittelsenkrechte der Verbindungsgeraden zwischen dem Führungsstift und der Führungsöffnung ist und zweitens sie symmetrisch zur Verbindungslinie anbringt. Dann sind nämlich die Kupplungshälften völlig identisch und bei der Kupplung wird ein an einer bestimmten Stelle der Kupplungshälfte liegendes Lichtleiterende mit dem an der gleichen Stelle liegenden Lichtleiterende der anderen Hälfte verbunden, d. h., die zu kuppelnden Lichtwellenleiter liegen in beiden Kupplungshälften an gleicher Stelle. Bei der an sich zulässigen, beliebigen Anordnung der Lichtwellenleiterenden in einem Kernteil ist dagegen das zweite Kernteil spiegelbildlich zur Mittensenkrechten mit den entsprechenden Bohrungen zu versehen. Liegen die Bohrungen in einem Kernteil, aber symmetrisch zur Mittensenkrechten, so sind die Bohrungen in allen Kernteilen gleich und lediglich Führungsstift und Führungsbohrung sind im einen Kernteil miteinander zu vertauschen.

Gemäß einer bevorzugten Ausführungsform der Erfindung weist jede Hülse zwei um 180° versetzte Viertelschalen als Fortsätze auf und diese tragen an den Enden ein Außengewinde mit zu der Überwurfmutter des Gegenstücks passender Größe.

Um die Lichtwellenleiterenden im entkuppelten Zustand zu schützen und um den Austritt von Lichtstrahlen zu verhindern, kann man eine Abdeckung für die Lichtleiterwellenenden vorsehen. Bei der erwähnten Anordnung der Lichtwellenleiterenden auf der Mittensenkrechten oder in der Nähe davon kann man dies dadurch realisieren, daß man an der Hülse ein unter der Wirkung einer Feder stehendes, in axialer Richtung verschiebbares Teil anordnet, wenigstens einen Abdeckstreifen mittels eines Scharniers an diesem Teil derart lagert, daß der Streifen auf die Lichtwellenleiterenden geklappt werden kann und daß die Kraft einer Feder auf den Streifen im Sinne des Aufklappens des Teils auf die Stirnfläche einwirkt.

Will man das gesamte Lichtwellenleiterkabel im entkuppelten Zustand mit einer Abdeckhaube versehen, so ist dies dadurch möglich, daß man die Fortsätze der Hülse so ausbildet, daß die Abwicklung des vorderen Rands der Hülse (einschließlich Fortsätzen) eine zweifache Sinuswelle darstellt.

Außerdem wird koaxial auf der Hülse ein eine diese Sinuswellen überdeckende und in der Abwicklung etwa ein Rechteck darstellende Halbschale vorgesehen, die derart lang ausgebildet ist und Gewinde an solchen Stellen aufweist, daß im gekuppelten Zustand die Gewinde beider Überwurfmuttern mit jeweils beiden Halbschalen in Eingriff sind ; die Halbschalen sind außerdem im Bereich der vier Ecken des Rechtecks entsprechend dem Durchmesser der Überwurfmuttern abgerundet und entlang dieser Abrundungen mit einem zu dem Gewinde der Überwurfmuttern passenden Außengewinde versehen derart, daß im ungekuppelten Zustand jeweils die zu einer Kupplungshälfte gehörende Halbschale als Abdeckhaube über die zugehörigen sinusförmigen Fortsätze der Hülse gestülpt und mittels der Überwurfmutter befestigt werden kann.

Im gekuppelten Zustand liegen die erhabenen Bereiche der gekuppelten Kernteile aufeinander. Insbesondere, wenn diese erhabenen Bereiche nicht verteilt auf der Kernteilstirnfläche angeordnet sind, ist es sinnvoll, am Rand noch Stützbereiche erhaben (mit gleicher Schichtdicke) auszubilden, z. B. einen erhabenen Randring vorzusehen.

Man kann die Lichtwellenleiter direkt in entsprechend bemessene Bohrungen einführen und dort befestigen, aber auch den einzelnen Lichtwellenleiter in einem Lagerstein haltern und diese Lagersteine in entsprechende Bohrungen des Kernteils einsetzen.

Um die Lichtwellenleiter in den Kupplungshälften von einem auf das Kabel wirkenden Zug zu entlasten, sieht man gemäß einer Ausführungsform der Erfindung in der Hülse zwei in Axialrichtung nebeneinander liegende Ringe vor, die an der Seite, an der sie aneinandergrenzen, zueinander passende, schräge Flächen haben. Das im Lichtleiterkabel vorhandene Zugentlastungsmaterial wird vom Kabel ausgehend um den näher am Kernteil liegenden Ring herum und anschließend zwischen den beiden schrägen Flächen der Ringe hindurch geführt. Dadurch werden bei einem Zug auf das Kabel die beiden Ringe in Achsrichtung gegen einen Anschlag gezogen, wobei das Zugentlastungsmaterial zwischen den Ringen eingeklemmt wird.

Anhand der Zeichnung werden Ausführungsbeispiele der Erfindung erläutert :

Es zeigen

Figur 1 ein erstes Ausführungsbeispiel der Erfindung,

Figur 2 Stirnflächen von zu kuppelnden Kupplungshälften,

Figur 3 ein Ausführungsbeispiel mit Abdeckstreifen,

Figur 4 ein Ausführungsbeispiel mit Abdeckkappen.

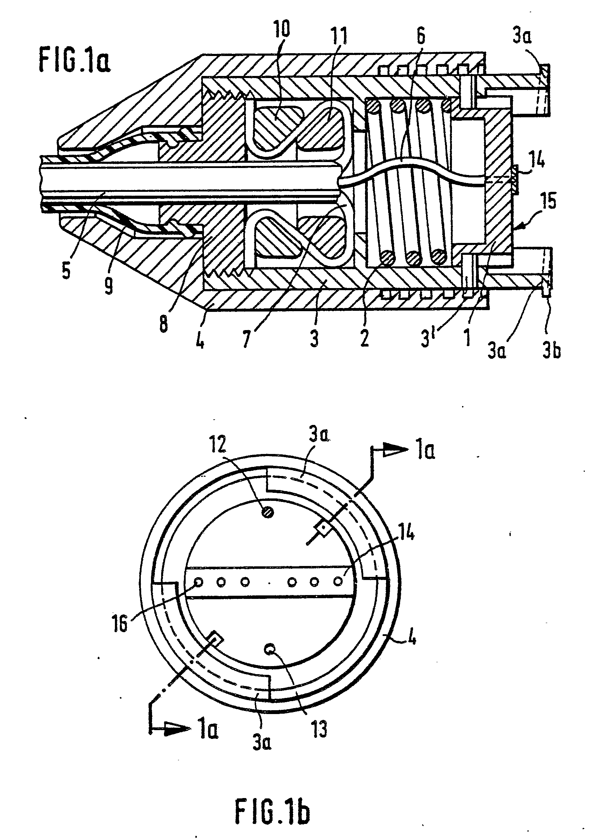

In Fig. 1a ist ein Längsschnitt durch eine erfindungsgemäß ausgebildete Kupplungshälfte dargestellt und in Fig. 1b die Aufsicht auf die Stirnfläche.

Das Kernteil ist hier mit 1, eine Feder mit 2, eine Hülse mit 3, eine Überwurfmutter mit 4, das Lichtleiterkabel mit 5 und nur eine in Fig. 1a gezeigte Lichtleiterfaser mit 6 bezeichnet. Das Zugentlastungsmaterial des Kabels 5 ist mit 7, ein Aufnahmeteil mit 8, ein Schrumpfschlauch mit 9 und zwei Ringe mit 10 und 11 bezeichnet. Ein Führungsstift trägt das Bezugszeichen 12, die Führungsöffnung das Bezugszeichen 13 und der erhaben ausgebildete Bereich der Stirnfläche 15 das Bezugszeichen 14. Die in diesem Bereich endenden Lichtwellenleiter sind mit 16 bezeichnet. Das Kernteil 1, in dem die Lichtwellenleiter 6 in Bohrungen befestigt sind, liegt normalerweise an den Stiften 3' an, ist in der Hülse 3 aufgrund der Feder 2 in axialer Richtung beweglich, und da auch eine gewisse radiale Bewegungsmöglichkeit besteht, ergibt sich auch eine gewisse Kippmöglichkeit des Teiles 1. Die Hülse hat zwei um 180° versetzte Viertelschalen 3a als Fortsätze, die am Ende einen Gewindegang 3b aufweisen. Bei der Kupplung der Kupplungsteile greifen der Stift 12 in die Führungsöffnung des Gegenstücks und der Führungsstift des Gegenstücks in die Öffnung 13 ein ; außerdem liegen die Viertelschalen des Gegenstücks zwischen den Viertelschalen 3a. Die spitze und gegebenenfalls abgerundete Ausbildung des Stifts 12 und auch eine etwas kegelige Ausbildung der Öffnung 13 sowie die radiale Beweglichkeit der Kernteile 1 erleichtern das Kuppeln dadurch, daß die radiale Beweglichkeit der Kernteile und die Formgebung der Führungsstifte und -bohrungen so aufeinander abgestimmt sind, daß zunächst eine Vorführung erfolgt, welche die Teile schließlich in eine so gute Ausrichtung zueinander bringt, daß durch die zur Erzielung eines optimalen Koppelwirkungsgrades zuletzt hochgenaue Führung zwischen Stift und Bohrung ohne wechselseitiges Verklemmen erfolgt. Wenn die sich entsprechenden erhabenen Bereiche aufeinander liegen, erfolgt eine axiale Verschiebung der Kernteile 1, wobei die Gewinde der Fortsätze des Gegenstücks zum Gewinde der Überwurfmutter 3 gelangen und damit verschraubt werden. Entsprechend werden die Fortsätze 3a mit der Überwurfmutter des Gegenstücks verschraubt.

Der erhabene Bereich ist hier als Streifen 14 ausgebildet, in dem sechs Lichtwellenleiter enden. Diese liegen auf der Mittensenkrechten zur Verbindungsgeraden des Stifts 12 mit der Öffnung 13. Bei dieser Anordnung der Enden der Lichtwellenleiter ist trotz völlig gleicher Ausbildung aller Teile der Kupplungshälften gewährleistet, daß einander entsprechende Leiterenden gekuppelt werden, so z. B. die in beiden Kupplungshälften links außen liegenden Leiterenden miteinander.

Das Kabel 5 mit seiner Ummantelung 9 wird im Aufnahmeteil 8 abgefangen. Die beiden Ringe 10 und 11 mit aufeinander liegenden, schrägen Flächen dienen der Zugentlastung und zum Schutz der Leiter 6. Um sie wird das Zugentlastungsmaterial 7 des Kabels 5 so herumgeschlungen, daß das Material zwischen den schrägen Flächen der Ringe liegt. Bei Zug am Kabel werden über das Material 7 die Ringe gegen das Aufnahmeteil 8 gezogen und dabei wird das Material zwischen den Ringen eingeklemmt.

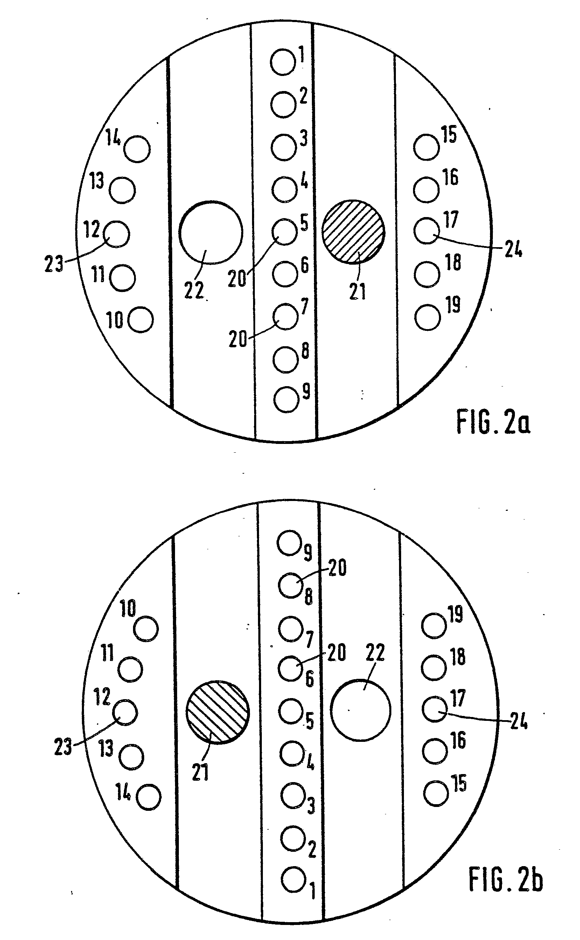

In den Fig. 2a und 2b sind die Stirnflächen der Kernteile zweier miteinander zu kuppelnder Kupplungsteile dargestellt, bei denen neben den auf Mittensenkrechten endenden Leitern noch weitere zur Verbindungslinie von Stift 21 und Öffnung 22 symmetrisch angeordnete Leiterenden 23 und 24 vorgesehen sind. Man sieht, daß die Bohrungen in beiden Hälften gleich angeordnet sind, daß jedoch in den beiden Hälften Stift 21 und Öffnung 22 vertauscht werden müssen. Man erkennt außerdem, daß die Öffnung 22 und der Stift 21 in nicht erhabenen Bereichen angeordnet sind.

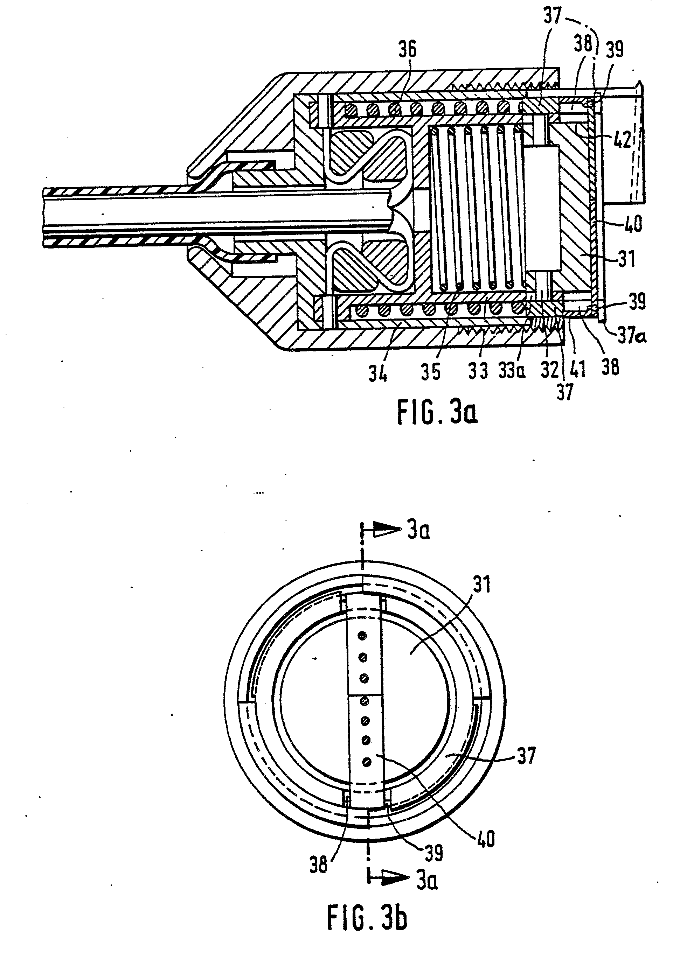

Die Fig. 3 zeigt in Fig. 3a wieder einen Längsschnitt durch eine etwas andere Ausführungsform gegenüber dem der Fig. 1 und in Fig. 3b eine Aufsicht und in Fig. 3c einen vergrößerten Teilausschnitt der Fig. 3a.

Das Kernteil 31 ist hier mittels der Stifte 32 in Langlöchern 33a der aus den Teilen 33 und 34 gebildeten Hülse verdrehfest gelagert und durch die Feder 35 in der gezeichneten Stellung gehalten. Am rechten Ende der beiden Hülsenteile 33 und 34 ist ein gegen die Kraft einer Feder 36 verschiebbarer Ring 37 angeordnet, der zwei Einschnitte 38 aufweist, in denen mittels eines Gelenks, dessen Verbindungsstift 39 sichtbar ist, je ein flexibler Blechstreifen 40 befestigt ist. Durch mit dem Ring 37 verbundene dünne Blechteile 41, die am vorderen Ende etwas abgebogen sind, werden durch die Wirkung der Feder 36 die Blechstreifen 40 im ungekuppelten Zustand in die gezeichnete Lage geklappt ; die Lichtleiterenden sind damit abgedeckt. Soll gekuppelt werden, so wird der am rechten Ende mit einer Nase versehene Ring 37 von dem Fortsatz des Gegenstückes nach links gedrückt, wodurch sich wegen der Kanten 42 des Kernteils 31 die Streifen aufrichten und in den Ringraum zwischen den Hülsenteilen 33 und 34 eingefahren werden. Das vom Stift 39 aus gesehene kurze Teil der Streifen 40 wird dabei teilweise hinter das als Blattfeder wirkende Teil 41 geklemmt.

Dies zeigt Fig. 3c deutlicher, in der der rechte untere Teil der Fig. 3a vergrößert herausgezeichnet ist und in der zusätzlich dargestellt ist, daß der Fortsatz 43 eines Gegenstücks über die Nase 37a den Ring 37 bereits um ein Stück nach links verschoben und damit den flexiben Blechstreifen 40 schon teilweise abgehoben hat.

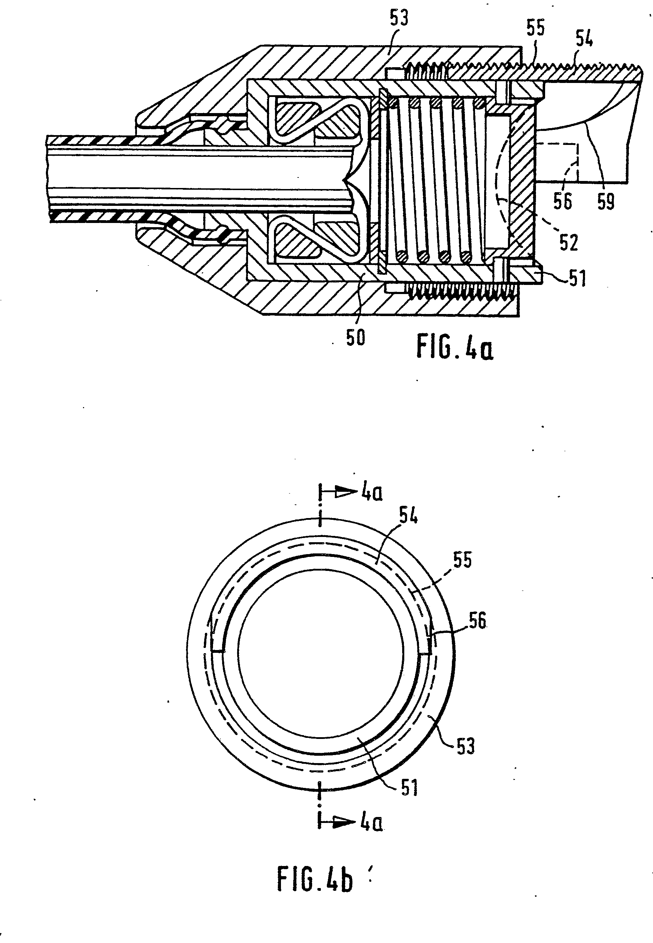

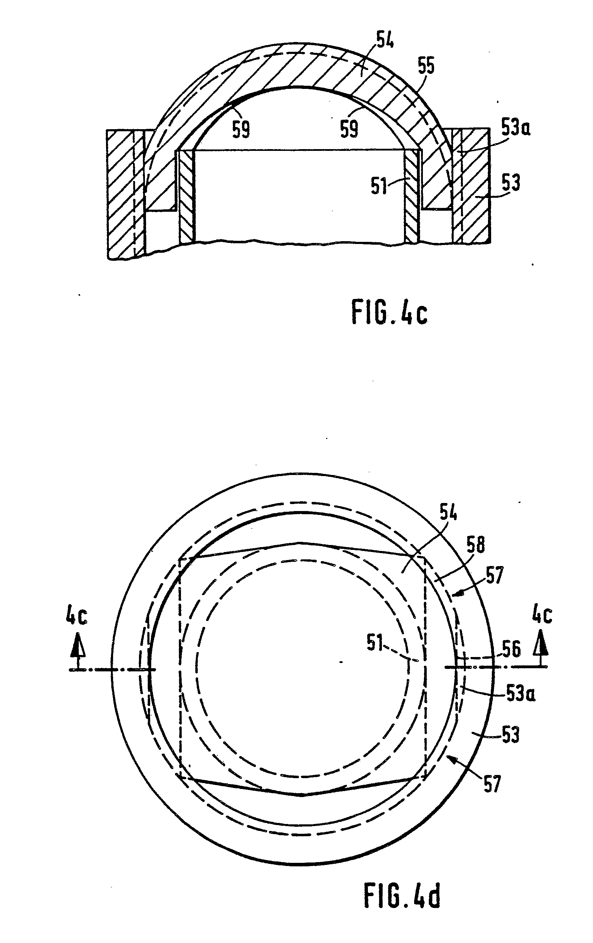

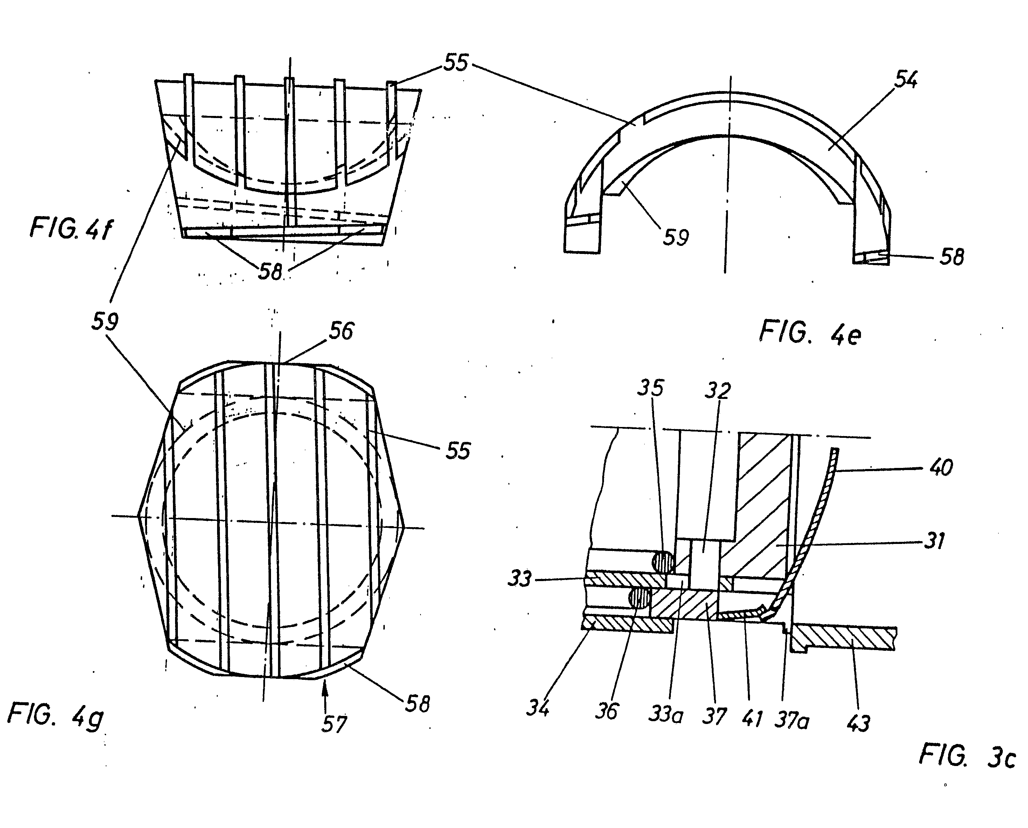

Beim Ausführungsbeispiel der Fig. 4 sind die Fortsätze an der Hülse 50 so ausgebildet, daß bei Abwicklung der Hülse diese am rechten Rand eine doppelte Sinuswelle darstellt. In der Zeichnung sind die am weitesten nach rechts vorspringenden Teile mit 51 bezeichnet ; die übrigen Randteile springen dagegen zurück, wie durch die Linie 52 angedeutet. Zwischen Hülse 50 und Überwurfmutter 53 ist ein halbschalenförmiges Kupplungsteil 54 vorgesehen, das ein Aussengewinde 55 über die volle Länge aufweist und mit der Überwurfmutter verbunden ist. Nach dem Kuppeln sind die beiden Überwurfmuttern mit den beiden Halbschalen verbunden.

Wie Fig. 4a und 4b zeigen, ist die Halbschale 54 an den Rändern 56 schmaler ausgebildet und ohne Gewinde. Im entkuppelten Zustand dient die Halbschale als Abschlußkappe. Hierzu wird sie von der Überwurfmutter getrennt und ausgehend von der in Fig. 4a gezeigten Lage über die Ränder 51 gekippt. Fig. 4c zeigt geschnitten den vorderen Rand 51 der Hülse 50 der Fig. 4a und zwar in einer um 90° gegenüber der Fig. 4a um die Längsachse gedrehten Stellung sowie den rechten Rand der Überwurfmutter 53 sowie das nun als Kappe aufgesetzte Kupplungsteil 54. Man sieht, insbesondere auch aus Fig. 4d, die eine Aufsicht auf die Anordnung der Fig. 4c zeigt, daß das Teil 54 nicht nur an den Rändern 56 schmaler ausgebildet ist und kein Gewinde trägt, sondern zusätzlich an den Ecken 57 abgerundet und dort mit Gewinde 58 versehen ist und zwar derart, daß dieses Außengewinde zu dem Gewinde der Überwurfmutter 53 paßt ; d. h., die Überwurfmutter wird mit dem Teil 54 in zwei um 90° verkippten Lagen verschraubt, wozu das Teil 54 zwei unterschiedlich angebrachte Gewinde aufweist. Dies zeigen noch besser die Fig. 4e-g, in denen dieses Teil 54 in drei Ansichten (4e Vorderansicht, 4f Seitenansicht, 4g Aufsicht) zu sehen ist. Hier sind deutlich die beiden senkrecht zueinander verlaufenden groben Gewinde 55 und 58 zu sehen, wobei das Gewinde 55 in gewissen Bereichen 56 weggeschnitten ist und das Gewinde 58 nur an vier Ecken 57 angeordnet ist.

Die bis jetzt beschriebene Kappe 54 würde lediglich auf der Kante der Vorsprünge 51 aufliegen und nicht auf der gesamten Stirnfläche der Vorsprünge 51. Dies läßt sich dadurch verbessern, daß auf der Innenfläche des Teils 54 entlang der Berührungslinie der Fortsätze 51 mit der Haube 54 eine entsprechend geformte Erhebung vorgesehen ist, die eine flächenhafte Berührung zwischen den Teilen 54 und 51 bewirkt. Dies ist durch die Linien 59 in Fig. 4a und 4e-g angedeutet.

Wenn man eine der beschriebenen Kupplungshälften mit einem Flansch versieht, kann man dieses Teil als Einführung in das Gehäuse eines Geräts benützen. Die Dioden zur Ein- oder Auskupplung können dabei in dieser Kupplungshälfte untergebracht sein.

Um unterschiedliche Kupplungshälften sofort unterscheiden zu können, kann man unterschiedliche Kupplungen mit unterschiedlichen Fortsätzen ausrüsten, z. B. zwei Viertelschalen, eine Halbschale, zwei Schalenteile mit unterschiedlicher Breite pro Kupplungshälfte. Eine weitere Unterscheidungsmöglichkeit ist durch eine Verdrehung der Ebene Stift/Öffnung zu dem Fortsatz bzw. den Fortsätzen gegeben.

**Ansprüche**

1. Lösbare Kupplung zum Verbinden von insbesondere mehreren Lichtwellenleitern, enthaltend für jede Kupplungshälfte je ein mit wenigstens einer präzis positionierten Bohrung versehenes Kernteil, in denen die einzelnen Lichtwellenleiter oder Lichtwellenleiterbündel eingeführt und befestigt sind, je eine Hülse, in der das Kernteil gelagert ist und die über einen Teil des Umfangs gehende Fortsätze aufweist, je einen axial verlaufenden Führungsstift und um 180° dazu versetzt eine Führungsöffnung an der Stirnseite des Kernteils, und je eine Überwurfmutter zum Verschrauben der Kupplung, dadurch gekennzeichnet, daß das Kernteil (1, 31) in Axialrichtung federnd (2, 35) abgestützt ist eine gewisse Bewegungsmöglichkeit in axialer und radialer Richtung aufweist und im entkuppelten Zustand an einem Anschlag anliegt, derart, daß bei Kupplung eine vorgegebene Axialverschiebung des Kernteils (1, 31) entgegen der Federkraft (2, 35) notwendig ist, daß der oder die Bereiche (14) der Stirnfläche des Kernteils, an denen Lichtwellenleiter (6, 16) enden, gegenüber den umgebenden Teilen erhaben ausgebildet sind und daß die Fortsätze (3a, 51) der Hülsen (3, 33/34, 50) selbst oder über den Fortsätzen (3a, 51) angeordnete, schalenförmige Teile (54) mit der Überwurfmutter (4, 53) des Gegenstücks zusammenwirkende Gewinde aufweisen.

2. Kupplung nach Anspruch 1, dadurch gekennzeichnet, daß die Lichtwellenleiter (6, 16) auf einer auf der Stirnfläche des Kernteils gedachten Geraden enden, die die Mittensenkrechte der Verbindungsgeraden des Führungsstifts (12) und der Führungsöffnung (13) jedes Kupplungsteils darstellt, und daß die Lichtwellenleiter (6, 16) symmetrisch zur Verbindungsgeraden angeordnet sind.

3. Kupplung nach Anspruch 2, dadurch gekennzeichnet, daß zusätzliche, außerhalb dieser Mittensenkrechten endende Lichtwellenleiter (23, 24) im Kernteil befestigt sind, daß diese hinsichtlich der Verbindungsgeraden von Führungsstift (21) und Führungsöffnung (22) symmetrisch angeordnet sind und daß sie bei den beiden zu kuppelnden Teilen einer Kupplung hinsichtlich der Mittensenkrechten seitenvertauscht angeordnet sind.

4. Kupplung nach einem der Ansprüche 1 bis 3, dadurch gekennzeichnet, daß jedes Kupplungsteil zwei um 180° versetzte Viertelschalen darstellende Fortsätze (3a) mit Außengewinde (3b) am Ende aufweist.

5. Kupplung nach Anspruch 2 und 4, dadurch gekennzeichnet, daß ein unter der Wirkung einer Feder (36) stehendes, in axialer Richtung verschiebbares Teil (37) an der Hülse (33/34) angeordnet ist, daß wenigstens ein Abdeckstreifen (40) für die Lichtwellenleiter insbesondere mittels eines Gelenks mit Verbindungsstift (39) an diesem verschiebbaren Teil (37) befestigt ist und daß die genannte Feder (36) im entkuppelten Zustand den Streifen (40) in die Abdeckstellung klappt.

6. Kupplung nach einem der Ansprüche 1 bis 3, dadurch gekennzeichnet, daß die Fortsätze (51) jeder Hülse (50) derart ausgebildet sind, daß der vordere Rand der Hülse im abgewickelten Zustand eine zweifache Sinuswelle darstellt und daß auf jeder Hülse (50) eine eine Sinuswelle des Fortsatzes überdeckende, in der Abwicklung etwa ein Rechteck darstellende Halbschale (54) angeordnet ist, die in axialer Richtung derart lang ausgebildet ist und Gewinde (55) an solchen Stellen trägt, daß im gekuppelten Zustand das Gewinde der beiden Überwurfmuttern (53) mit jeweils beiden Halbschalen (54) in Eingriff gelangt, und daß die Halbschalen (54) jeweils im Bereich der vier Ecken (57) des Rechtecks entsprechend dem Durchmesser der Überwurfmuttern (53) abgerundet und entlang dieser Abrundung mit einem zu dem Gewinde der Überwurfmutter (53a) passenden Außengewinde (58) versehen ist derart, daß im ungekuppelten Zustand jeweils die zu einer Kupplungshälfte gehörende Halbschale (54) als Abdeckhaube über die zugehörigen sinusförmigen Fortsätze (51) der Hülse (50) gestülpt und mittels der Überwurfmutter (53) befestigt werden kann.

7. Kupplung nach einem der Ansprüche 1 bis 6, dadurch gekennzeichnet, daß zusätzlich zu den erhabenen Bereichen, in denen Lichtwellenleiter enden, noch am Rand der Stirnfläche des Kernteils entsprechend erhabene Randbereiche, insbesondere ein erhabener Randring, vorgesehen ist.

8. Kupplung nach einem der Ansprüche 1 bis 7, dadurch gekennzeichnet, daß der Führungsstift (21) und die Führungsöffnung (22) im nicht erhabenen Bereich angeordnet sind.

9. Kupplung nach einem der Ansprüche 1 bis 8, dadurch gekennzeichnet, daß das Kernteil mit gegenüber den Durchmessern der Lichtwellenleiter größeren Bohrungen versehen sind und daß in diese Bohrungen Lagersteine eingesetzt sind, die je einen Lichtwellenleiter haltern.

10. Kupplung nach einem der Ansprüche 1 bis 9, dadurch gekennzeichnet, daß in der Hülse (3) zwei Ringe (10, 11) in Axialrichtung nebeneinander liegend angeordnet sind, von denen jeder eine unter dem gleichen Winkel schräg zur Achse verlaufenden Fläche aufweist, daß diese schrägen Flächen aneinander anliegen und daß das im Lichtwellenleiterkabel (5) vorhandene Zugentlastungsmaterial (7) vom Kabel (5) ausgehend um den näher an dem Kernteil liegenden Ring (11) herum und anschliessend zwischen den schrägen Ringflächen hindurchgeführt ist, so daß bei Zug auf das Kabel die Ringe (10, 11) in Achsrichtung gegen einen Anschlag (8) gezogen werden und dabei das Zugentlastungsmaterial (7) einklemmen.

11. Kupplung nach einem der Ansprüche 1 bis 10, dadurch gekennzeichnet, daß der Führungsstift (12) in der Nähe der Spitze einen konischen und eventuell abgerundeten Abschnitt aufweist und nur in der Nähe des Fußes als Paßstift ausgebildet ist.

12. Kupplung nach Anspruch 11, dadurch gekennzeichnet, daß auch die Führungsöffnung (13) in der Nähe des oberen Randes konisch ausgebildet ist und erst am Grund exakt führt.

## Claims

1. Releasable coupling, especially for connecting several light-wave guides, including, for each coupling half, a respective core part provided with at least one precisely positioned bore, the individual light-wave guides or light-wave-guide bundles being led into and fixed in the core parts, a respective casing, in which the core part is supported and which has extensions which cross a part of the periphery, a respective axially-extending guide stem and a guide opening displaced at 180° relative thereto on the front end of the core part, and a respective screw cap for screwing the coupling, characterised in that the core part (1, 31) is supported resiliently (2, 35) in the axial direction, is able to move axially and radially to a certain extent and in the uncoupled condition lies against an abutment such that upon coupling a predetermined axial displacement against the resilient force (2, 35) is necessary, that the region or regions (14) of the front end of the core part at which light-wave guides end are formed raised from the surrounding parts, and that the extensions (3a, 51) of the casings (3, 33/34, 50) themselves or shell-like parts (54) arranged over the extensions (3a, 51) have threads cooperating with the screw cap (4, 53), of the counterpart.

2. Coupling according to claim 1, characterised in that the light-wave guides (6, 16) end at the front end of the core part in an imaginary straight line, which perpendicularly bisects the straight line connecting the guide stem (12) and the guide opening (13) of each coupling part, and that the light-wave guides (6, 16) are arranged symmetrically relative to the connecting straight line.

3. Coupling according to claim 2, characterised in that additional light-wave guides (23, 24) are fixed in the core part outside said bisecting straight line, that these are arranged symmetrically with reference to the straight line connecting the guide stem (21) and guide opening (22) and that they are arranged laterally transposed with reference to the bisecting straight line on both the coupling parts of a coupling.

4. Coupling according to any one of claims 1 to 3, characterised in that each coupling part has two extensions (3a) which are displaced by 180°, represent quarter-shells and are externally threaded (3b) at the end.

5. Coupling according to claim 2 and 4, characterised in that there is arranged on the casing (33/34) a part (37) which is under the effect of a spring (36) and is displaceable in the axial direction, that at least one covering strip (40) for the light-wave guides is fixed to this displaceable part (37) especially by means of a joint with coupling pin (39) and that the said spring (36) in the uncoupled condition folds the strip (40) into the covering position.

6. Coupling according to any one of claims 1 to 3, characterised in that the extensions (51) of each casing (50) are so constructed that the front edge of the casing in developed view represents a two fold sine wave and that there is arranged on each casing (50) a half shell (54) which covers one sine wave of the extension and represents in the developed view approximately a rectangle, the half shell being constructed sufficiently long in the axial direction and being threaded (55) at such positions, that in the coupled condition the thread of the two screw caps (53) comes into engagement with the two respective half shells (54), and that each half shell (54) is rounded off in the region of the four corners (57) of the rectangle corresponding to the diameter of the screw caps (53) and along this rounding is provided with an external thread (58) matching the thread of the screw cap (53a) such that in the uncoupled condition the respective half shell (54) belonging to one coupling half can be turned round as the covering cap over the accompanying sine-like extensions (51) of the casing (50) and fastened by means of the screw cap (53).

7. Coupling according to any one of claims 1 to 6, characterised in that in addition to the raised regions in which the light-wave guides end, correspondingly raised edge regions at the edge of the front end of the core part, especially a raised edge ring is provided.

8. Coupling according to any one of claims 1 to 7, characterised in that the guide stem (21) and the guide opening (22) are arranged in the unraised region.

9. Coupling according to any one of claims 1 to 8, characterised in that the core part is provided with bores which are larger than the diameters of the light-wave guides and that in these bores there are inserted bearing jewels which each hold a light-wave guide.

10. Coupling according to any one of claims 1 to 9, characterised in that in the casing (3) there are arranged two rings (10, 11) lying next to each other in the axial direction, of which each has a surface running inclined to the axis at the same angle, that these inclined surfaces abut each other and that the strain-relief material (7) provided in the light-wave guide cable (5) starting from the cable (5) is passed around the ring (11) which lies nearer to the core part and finally is passed between the inclined ring surfaces, so that upon a pull on the cable the rings (10, 11) are pulled in the axial direction against an abutment (8) and at the same time clamp the strain-relief material (7).

11. Coupling according to any one of claims 1 to 10, characterised in that the guide stem (12) has in the neighbourhood of the tip a conical and possibly rounded off cross-section and is constructed as a fitting pin only in the neighbourhood of the foot.

12. Coupling according to claim 11, characterised in that also the guide opening (13) is constructed conically in the neighbourhood of the upper edge and extends accurately only at the base.

**Revendications**

1. Connecteur démontable destiné à raccorder en particulier plusieurs conducteurs de lumière, qui comprend pour chaque demi-connecteur, un noyau muni d'au moins un perçage positionné avec précision, dans lequel les différents conducteurs de lumière ou faisceaux de conducteurs de lumière sont engagés et fixés, un manchon dans lequel le noyau est monté et qui présente des prolongements s'étendant sur une partie de la périphérie, un ergot de guidage s'étendant axialement et une ouverture de guidage décalée de 180° par rapport à cet ergot, prévus sur la face frontale de ce noyau et un écrou chapeau servant à assembler le connecteur par vissage, caractérisé en ce que le noyau (1, 31) est appuyé élastiquement dans la direction axiale (2, 35) et présente une certaine possibilité de déplacement dans la direction axiale et dans la direction radiale et que, dans l'état désaccouplé, il est appuyé contre une butée de telle manière que, lors de la manœuvre d'accouplement, il soit nécessaire de réaliser une translation axiale prédéterminée du noyau (1, 31) à l'encontre de la force élastique (2, 35), en ce que la ou les région(s) (14) de la surface frontale du noyau dans laquelle ou lesquelles les conducteurs de lumière (6, 16) se terminent est ou sont en relief par rapport aux parties environnantes et en ce que les prolongements (3a, 51) des manchons (3, 33/34, 50), ou bien des éléments (54) en forme de coquille disposés sur les prolongements (3a, 51), présentent un filetage qui peut coopérer avec l'écrou chapeau (4, 53) de la pièce complémentaire.

2. Connecteur selon la revendication 1, caractérisé en ce que les conducteurs de lumière (6, 16) se terminent sur une droite fictive située sur la face frontale du noyau, qui représente la médiatrice de la droite de jonction qui joint l'ergot de guidage (12) à l'ouverture de guidage (13) de chaque demi-connecteur et en ce que les conducteurs de lumière (6, 16) sont disposés symétriquement par rapport à cette droite de jonction.

3. Connecteur selon la revendication 2, caractérisé en ce que des conducteurs de lumière supplémentaires (23, 24) qui se terminent en dehors de cette médiatrice sont fixés dans le noyau, en ce que ces conducteurs sont disposés symétriquement par rapport à la droite de jonction qui joint l'ergot de guidage (21) à l'ouverture de guidage (22) et en ce qu'ils sont disposés dans des positions permutées latéralement par rapport à la médiatrice dans les deux éléments d'un connecteur qui doivent être accouplés.

4. Connecteur selon l'une des revendications 1 à 3, caractérisé en ce que chaque demi-connecteur présente des prolongements (3a) munis d'un filetage extérieur (3b) à leur extrémité et qui représentent des quarts de coquille décalés de 180°.

5. Connecteur selon les revendications 2 et 4, caractérisé en ce qu'un élément (37) mobile en translation dans la direction axiale, qui subit l'action d'un ressort (36), est prévu sur le manchon (33, 34), en ce qu'au moins une languette de recouvrement (40) destinée à recouvrir les conducteurs de lumière est fixée à cet élément mobile en translation (37), notamment au moyen d'une articulation munie d'un axe de liaison (39), et en ce que le ressort (36) précité rabat la languette (40) dans la position de recouvrement dans l'état désaccouplé.

6. Connecteur selon l'une des revendications 1 à 3, caractérisé en ce que les prolongements (51) de chaque manchon (50) sont réalisés de telle manière que le bord avant du manchon présente, en développement, une onde sinusoïdale double et en ce que, sur chaque manchon (50), est disposée une demi-coquille (54) qui recouvre une onde sinusoïdale du prolongement et qui, en développement, représente à peu près un rectangle, cette demi-coquille étant suffisamment longue dans la direction axiale et portant un filetage (55) en des points tels que, dans l'état accouplé, le filetage de chacun des deux écrous chapeaux (53) entre en prise avec les deux demi-coquilles (54) et en ce que les demi-coquilles (54) sont arrondies dans la région des quatre angles (54) du rectangle, selon le diamètre des écrous chapeaux (53) et sont munies, le long de cet arrondi, d'un filetage extérieur (58) qui s'adapte au filetage des écrous chapeaux (53a), de manière que, dans l'état désaccouplé, chaque demi-coquille (54) appartenant à un demi-connecteur puisse être rabattue par-dessus les prolongements sinusoïdaux correspondants (51) du manchon (50) et être fixée au moyen de l'écrou chapeau (53) pour servir de chapeau de recouvrement.

7. Connecteur selon l'une des revendications 1 à 6, caractérisé en ce que, en supplément des régions en relief dans lesquelles se terminent les conducteurs de lumière, il est encore prévu, le long du bord de la surface frontale du noyau, des régions marginales présentant un relief correspondant, en particulier, une couronne marginale.

8. Connecteur selon l'une des revendications 1 à 7, caractérisé en ce que l'ergot de guidage (41) et l'ouverture de guidage (22) sont disposés dans la région qui n'est pas en relief.

9. Connecteur selon l'une des revendications 1 à 8, caractérisé en ce que le noyau est muni de perçages de plus grande dimension que le diamètre des conducteurs de lumière et en ce que, dans ces perçages, sont engagés des embouts de portée qui tiennent chacun un conducteur de lumière.

10. Raccord selon l'une des revendications 1 à 9, caractérisé en ce que, dans le manchon (3), sont disposées l'une contre l'autre dans la direction axiale, deux bagues (10, 11) dont chacune présente une surface inclinée sur l'axe du même angle que la surface de l'autre, en ce que ces deux surfaces inclinées sont appuyées l'une contre l'autre et en ce que la matière de décharge de l'effort de traction (7) prévue dans le câble (5) des conducteurs de lumière est retournée, à partir du câble (5), autour de la bague (11) la plus proche du noyau puis enfilée entre les deux surfaces annulaires obliques de sorte que, en réponse à une traction exercée sur le câble, les bagues (10, 11) sont attirées dans la direction axiale contre une butée (8) et, dans ce mouvement, coincent la matière (7) de décharge de l'effort de traction.

11. Connecteur selon l'une des revendications 1 à 10, caractérisé en ce que l'ergot de guidage (12) présente dans la région de sa pointe un segment conique et éventuellement arrondi, tandis qu'il ne présente pas la forme d'un ergot de positionnement que dans dans la région du pied.

12. Connecteur selon la revendication 11, caractérisé en ce que l'ouverture de guidage (13) est également de forme conique dans la région du bord supérieur et ne guide avec précision qu'au fond.

FIG.1a

FIG.1b

FIG. 2a

FIG. 2b

FIG. 3a

FIG. 3b

FIG.4a

FIG.4b

FIG. 4c

FIG. 4d

FIG. 4f

55

54

59

58

FIG. 4e

59

56

55

35   32

40

31

33

34   36   33a   37   41   37a   43

FIG. 4g

57

58

FIG. 3c

0 033 118